# EUROPEAN PATENT APPLICATION

(11) **EP 2 555 547 A1**
(43) Date of publication of application: **06.02.2013**
(21) Application number: 12179153.7
(22) Date of filing: 03.08.2012
(51) Int. Cl.: H04W 8/18

(54) **Method and apparatus for switching IMSI**

(30) Priority: 04.08.2011 CN 201110222530
(71) Applicant: Huawei Device Co., Ltd., Longgang District Shenzhen Guangdong 518129 (CN)
(72) Inventor: Chen, Rongsheng, 518129 Shenzhen (CN)
(74) Representative: Körber, Martin Hans

(57) **Abstract**

A method and an apparatus for switching an international mobile subscriber identity, IMSI are provided. The method includes: acquiring public land mobile network, PLMN identification of a PLMN being currently visited by a user; judging whether an IMSI matching the PLMN identification exists in an IMSI list; and if yes, switching to the matching IMSI. Through the method the PLMN identification of the PLMN being currently visited by the user is acquired, the IMSI matching the PLMN identification is searched for in the IMSI list, and then the matching IMSI is switched to. In this way, a function of automatic switching among multiple IMSIs in a single SIM card is implemented, the user does not need to choose which IMSI to be switched to manually, user experience is good, and it is ensured to switch to a proper IMSI to provide a local charge for the user.

## Description

### FIELD OF THE INVENTION

The present invention relates to the field of communications, and in particular, to a method and an apparatus for switching an IMSI.

### BACKGROUND OF THE INVENTION

At present, some cross-regional operators own multiple sub-networks at the same time, and each sub-network has its own unique PLMN (public land mobile network) identification. The PLMN identification is formed by an MCC (mobile country code) and an MNC (mobile network code) together, where the MCC is formed by 3 digits, and is configured to uniquely identify a country, for example, the MCC of China is 460; and the MNC is formed by 2 digits or 3 digits, and is configured to uniquely identify a network, for example, the MNC of China Mobile is 00, and the MNC of China Unicom is 01. Further, the PLMN identification and an MSIN (mobile subscriber identification number) together form an IMSI (international mobile subscriber identity) of the current sub-network, where the IMSI is identification for distinguishing a user identity, and is stored in a SIM (subscriber identity module) card. In one sub-network, a user using an IMSI that matches the PLMN identification of the sub-network may enjoy a local charge.

To support the user to move among different sub-networks with consideration of a preferential charge, an operator usually customizes an SIM card with multiple IMSIs, that is, one SIM card includes multiple IMSIs, and different IMSIs belong to different sub-networks. In this way, when the user moves from a first sub-network to a second sub-network, an IMSI of the second sub-network may be switched to serve as the current IMSI of the user, thereby a local charge may be enjoyed, and generating a roaming charge may be avoided. For example, for a 3UK (an operator) user who customizes H3G (another operator) at the same time, when the user goes on business trips to Ireland, Italy, Hong Kong, and Australia, these places have H3G sub-networks, so an IMSI of a local H3G sub-network may be switched to after the user arrives in a place of a business trip, the SIM card is equivalent to a local card, and therefore the local charge may be enjoyed without a need of changing the SIM card; but if the user goes on a business trip to France, as the place has no H3G sub-network, the user still keeps the IMSI of 3UK, thereby generating a roaming charge.

A method for switching among multiple IMSIs in a single SIM card in the prior art is that, with assistance of an STK (SIM TOOL KIT, subscriber identity module tool kit) technology, the SIM card may request for showing necessary menus on an UI (user interface) in a display screen of a terminal for the user, and these menus list all available IMSIs, definitely, these menus may not show specific IMSI numbers, but show, for example, a region name, and the user manually chooses to switch to which IMSI according to a moving condition of the user and an actual location of the user.

The prior art has at least the following problems:

The user needs to judge which sub-network is currently entered and which IMSI should be chosen, and then manually chooses to switch. In an actual using process, this manner not only brings bad use experience, but also may generate an unnecessary roaming charge due to a wrong judgment of the user.'

### SUMMARY OF THE INVENTION

To solve the problems of the prior art, embodiments of the present invention provide a method and an apparatus for switching an IMSI. The technical solutions are as follows:
In one aspect, a method for switching an IMSI is provided, where the method includes:
   acquiring PLMN identification of a public land mobile network PLMN being currently visited by a user;
   judging whether an IMSI matching the PLMN identification exists in an international mobile subscriber identity IMSI list; and
   if yes, switching to the matching IMSI.
In another aspect, an apparatus for switching an IMSI is provided, which includes:
   an acquiring module, configured to acquire PLMN identification of a public land mobile network PLMN being currently visited by a user;
   a judging module, configured to judge whether an IMSI matching the PLMN identification acquired by the acquiring module exists in an international mobile subscriber identity IMSI list; and
   a switching module, configured to, when the judging module judges that the IMSI matching the PLMN identification exists, switch to the matching IMSI.

The technical solutions provided by the embodiments of the present invention bring beneficial effects as follows:

Through acquiring the PLMN identification of the PLMN being currently visited by the user, judging whether the IMSI matching the PLMN identification exists in the IMSI list, and if yes, switching to the matching IMSI, the function of automatic switching among multiple IMSIs in a single SIM card is implemented, the user does not need to choose which IMSI to be switched to manually, the user experience is good, and it is ensured to switch to a proper IMSI to provide a local charge for the user.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other accompanying drawings from these accompanying drawings without creative efforts.
FIG. 1 is a flow chart of a method for switching an IMSI according to Embodiment 1 of the present invention;
FIG. 2 is a flow chart of a method for switching an IMSI according to Embodiment 2 of the present invention;
FIG. 3 is a flow chart of a method for switching an IMSI according to Embodiment 3 of the present invention;
FIG. 4 is a schematic structural diagram of an apparatus for switching an IMSI according to Embodiment 4 of the present invention;
FIG. 5 is a schematic structural diagram of another apparatus for switching an IMSI according to Embodiment 4 of the present invention; and
FIG. 6 is a schematic structural diagram of still another apparatus for switching an IMSI according to Embodiment 4 of the present invention.

### DETAILED DESCRIPTION OF THE EMBODIMENTS

In order to make the objectives, technical solutions and advantages of the present invention clearer, the embodiments of the present invention are described in detail in the following with reference to the accompanying drawings.

### Embodiment 1

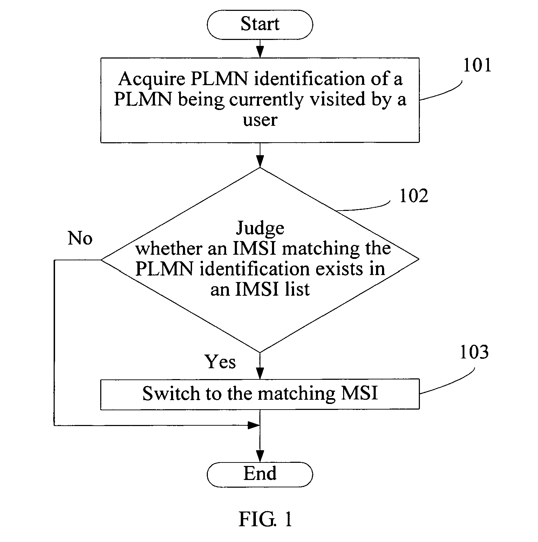

This embodiment of the present invention provides a method for switching an IMSI, referring to FIG. 1, the method process includes:
101: Acquire PLMN identification of a PLMN being currently visited by a user.
   For this step, optionally, the PLMN identification may be acquired from a location area identification or a routing area identification, or, the last PLMN identification added to a forbidden PLMN list is acquired.
102: Judge whether an IMSI matching the PLMN identification exists in an IMSI list. If yes, step 103 is performed, otherwise, the process ends.
103: If the matching IMSI exists, switch to the matching MSI. The process ends.

With the method provided in this embodiment of the present invention, the PLMN identification of the PLMN being currently visited by the user is acquired, whether the IMSI matching the PLMN identification exists in the IMSI list is judged, and if yes, the matching IMSI is switched to. In this way, a function of automatic switching among multiple IMSIs in a single SIM card is implemented, the user does not need to choose which IMSI to be switched to manually, user experience is good, and it is ensured to switch to a proper IMSI to provide a local charge for the user.

In a wireless network provided by an operator, each sub-network has its own PLMN identification, and in one sub-network, the user using an IMSI matching the PLMN identification of the sub-network may enjoy the local charge. The IMSI of the user in the sub-network is formed by the PLMN identification and an MSIN of the sub-network, and the IMSI is stored in a SIM card. In another aspect, LAI (location area identification) and RAI (routing area identification) are also stored in the SIM card. The LAI is formed by the PLMN identification and an LAC (location area code), and the RAI is formed by the LAI and an RAC (routing area code). As can be seen from the foregoing, the IMSI, the LAI and the RAI all include the PLMN identification. Therefore, the PLMN identification of the PLMN being currently visited may be found from both the LAI and the RAI.

A UE (user equipment) is formed by an ME (mobile equipment) and an SIM card together. When the UE moves from one PLMN to a new PLMN, the new PLMN may be called the PLMN being currently visited, that is, a VPLMN (Visit PLMN). After roaming to the VPLMN, the UE initiates a registration request to the VPLMN, and the VPLMN may accept the registration of the UE and also may reject the registration of the UE. The two conditions are described in detail separately in the following.

### Embodiment 2

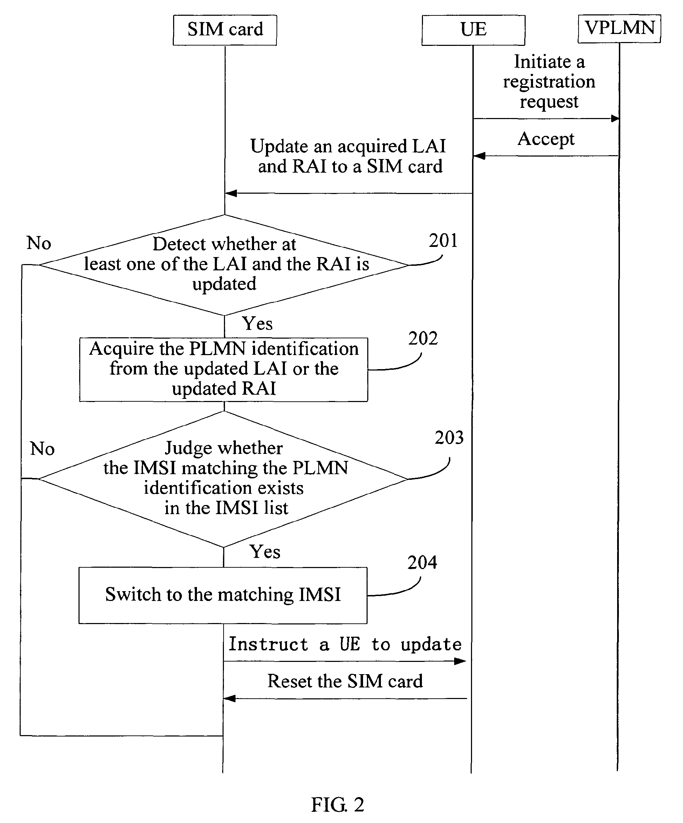

After roaming to a new VPLMN, a UE initiates a registration request to the VPLMN, and the VPLMN accepts the registration of the UE and allows roaming. According to a regulation of a protocol, the UE acquires an LAI and an RAI of the current VPLMN from a network downlink message, updates the acquired LAI to an EFLOCI file in a SIM card, and updates the RAI to an EFPSLOCI file in the SIM card. That is to say, the UE may update each change of the LAI and each change of the RAI to corresponding files in the SIM card. Therefore, this embodiment of the present invention provides a method for switching an IMSI, and the method may be performed by the SIM card through an STK application program in the SIM card, but is not limited to this, for example, it may also be implemented by modifying a program on the UE. Referring to FIG. 2, the method process includes:
201: The SIM card detects whether at least one of the LAI and the RAI is updated. If yes, step 202 is performed, otherwise, the process ends.
   Specifically, the STK application program in the SIM card may monitor a change condition of the LAI and the RAI in the EFLOCI file and the EFPSLOCI file, and because the LAI and the RAI may not be updated synchronously, in order to rapidly and timely learn that the UE enters a new PLMN and the roaming occurs, as long as either the LAI or the RAI changes, it may be considered that the UE enters the new PLMN, and step 202 is triggered immediately to accurately acquire the PLMN identification of the VPLMN where the UE is currently located from the updated LAI or the updated RAI.
202: Acquire the PLMN identification from the updated LAI or the updated RAI.
   This step is used to acquire the PLMN identification of the PLMN being currently visited by the user. Specifically, an MCC and an MNC are acquired from the updated LAI or the updated RAI, and the MCC and the MNC form the PLMN identification.
   Optionally, after the PLMN identification is acquired, whether the acquired PLMN identification is correct PLMN identification may further be judged. If yes, step 203 is performed, otherwise, the process ends.
203: Judge whether an IMSI matching the PLMN identification exists in an IMSI list. If yes, step 204 is performed, otherwise, the process ends.
   Specifically, the IMSI matching the PLMN identification is searched for in a candidate IMSI list stored in the SIM card, and the IMSI matching the PLMN identification is an IMSI that includes PLMN identification being the same as the acquired PLMN identification. If the matching IMSI is found, step 204 is performed, if it is not found, , the IMSI is not switched, and the process ends.
204: If the matching IMSI exists, switch to the matching IMSI. The process ends.

Specifically, if the matching is successful, an STK menu select command is simulated to instruct the SIM card to switch to the matching IMSI, and a REFRESH command is sent to the UE through a Cu interface (an interface between the SIM card and a mobile device) to instruct the UE to update, the UE resets the SIM card, and the new IMSI takes effect, thereby automatically completing matching and switching of an IMSI under each sub-network (PLMN).

With the method provided by this embodiment of the present invention, the change condition of the LAI and the RAI in the SIM card is monitored, the PLMN identification of the current VPLMN is accurately acquired from the LAI or the RAI, the IMSI list is searched for to acquire the matching IMSI according to the PLMN identification, and the matching IMSI is switched to. In this way, a function of automatic switching among multiple IMSIs in a single SIM card is implemented, the user does not need to choose which IMSI to be switched to manually, user experience is good, and it is ensured that a proper IMSI is switched to in time after the user moves to the new PLMN, thereby providing a local charge for the user and avoiding an unnecessary roaming charge.

### Embodiment 3

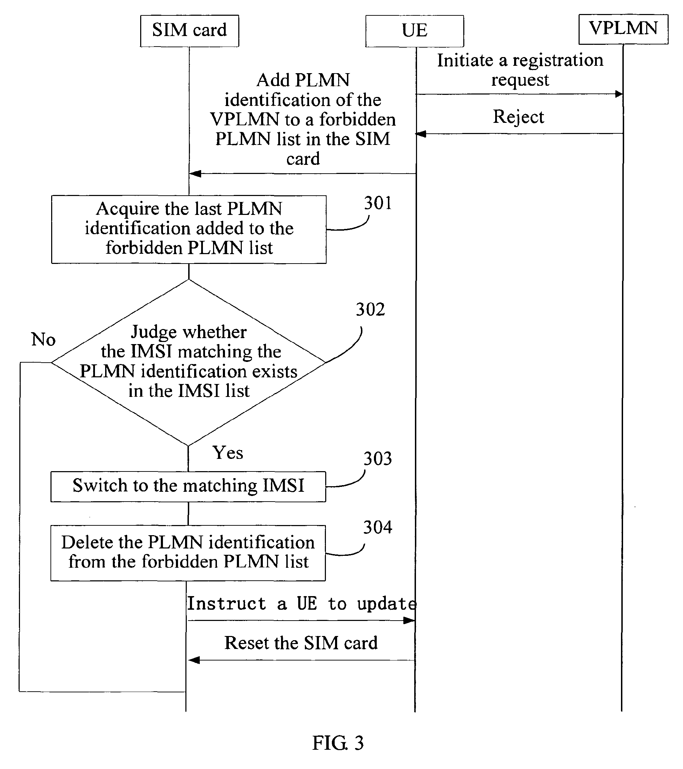

After roaming to a new VPLMN, a UE initiates a registration request to the VPLMN, and the VPLMN rejects the registration of the UE, and forbids roaming. According to a regulation of a protocol, the UE adds PLMN identification of the VPLMN in a forbidden PLMN (FPLMN) list in an EFFPLMN file in a SIM card. That is to say, if the UE moves to a VPLMN which does not support roaming, PLMN identification of the VPLMN may be added to the forbidden PLMN list in the EFFPLMN file in the SIM card. Therefore, this embodiment of the present invention provides a method for switching an IMSI, and the method may be performed by the SIM card through an STK application program in the SIM card, but is not limited to this, for example, it may also be implemented by modifying a program in the UE. Referring to FIG. 3, the method process includes:
301: The SIM card acquires the last PLMN identification added to the forbidden PLMN list.
   This step is used to acquire the PLMN identification of the PLMN being currently visited by the user. Specifically, the STK application program in the SIM card may monitor a changing condition of the forbidden PLMN list in the EFFPLMN file, and when the forbidden PLMN list is updated, newly added PLMN identification is the last PLMN identification added to the forbidden PLMN list.
   Optionally, after the PLMN identification is acquired, whether the PLMN identification is correct PLMN identification may further be judged. If yes, step 302 is performed, otherwise, the process ends.
302: Judge whether an IMSI matching the PLMN identification exists in an IMSI list. If yes, step 303 is performed, otherwise, the process ends.
   Specifically, the IMSI matching the PLMN identification is searched for in a candidate IMSI list stored in the SIM card, and the IMSI matching the PLMN identification is an IMSI that includes PLMN identification being the same as the acquired PLMN identification. If the matching IMSI is found, step 303 is performed, if it is not found, the IMSI is not switched, and the process ends.
303: If the matching IMSI exists, switch to the matching IMSI.
   Specifically, if the matching is successful, an STK menu select command is simulated to instruct the SIM card to switch to the matching IMSI.
304: Delete the PLMN identification from the forbidden PLMN list.

Specifically, the PLMN identification is deleted from the forbidden PLMN list so that automatic switching may be performed again at the next roaming to the PLMN. After the deletion, a REFRESH command is sent to the UE through a Cu interface to instruct the UE to update, the UE resets the SIM card, and the new IMSI takes effect, thereby automatically completing matching and switching of an IMSI under each sub-network (PLMN)

With the method provided by this embodiment of the present invention, the change condition of the forbidden PLMN list in the EFFPLMN file is monitored, the last added PLMN identification is acquired, the IMSI list is searched for to acquire the matching IMSI according to the PLMN identification, and the matching IMSI is switched to. In this way, a function of automatic switching among multiple IMSIs in a single SIM card is implemented, the user does not need to choose which IMSI to be switched to manually, user experience is good, and it is ensured that a proper IMSI is switched to in time after the user moves to the new PLMN, thereby providing a local charge for the user and avoiding an unnecessary roaming charge.

### Embodiment 4

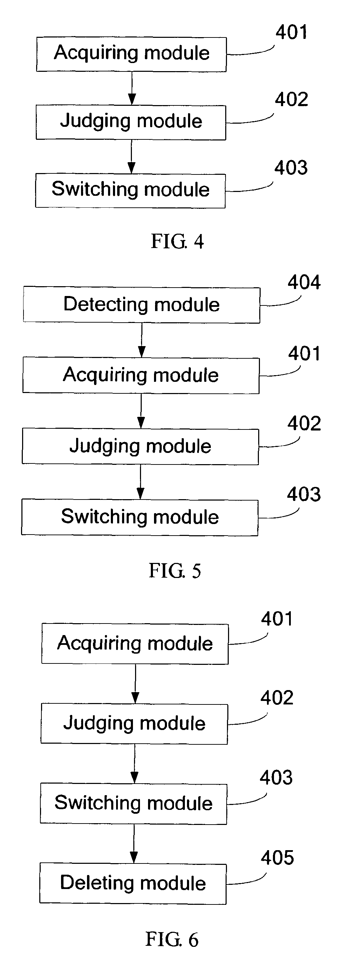

Referring to FIG. 4, this embodiment of the present invention provides an apparatus for switching an IMSI, the apparatus may be a SIM card supporting multiple IMSI menus, but is not limited to this, for example, it may also be implemented through a UE. The apparatus includes:
an acquiring module 401, configured to acquire PLMN identification of a PLMN being currently visited by a user;
a judging module 402, configured to judge whether an IMSI matching the PLMN identification that is acquired by the acquiring module 401 exists in an IMSI list; and
a switching module 403, configured to, when the judging module 402 judges that the IMSI matching the PLMN identification exists, switch to the matching IMSI.

In an embodiment, after roaming to a new VPLMN, a UE initiates a registration request to the VPLMN, and when the VPLMN accepts the registration of the UE and allows roaming, the acquiring module 401 is specifically configured to acquire the PLMN identification from an LAI or an RAI.

Further, referring to FIG. 5, the apparatus further includes:
a detecting module 404, configured to, before the acquiring module 401 acquires the PLMN identification from the LAI or the RAI, detect whether at least one of the LAI and the RAI is updated; and if yes,
correspondingly, the acquiring module 401 is specifically configured to acquire the PLMN identification from the updated LAI or the updated RAI.

In another embodiment, after roaming to the new VPLMN, the UE initiates the registration request to the VPLMN, and when the VPLMN rejects the registration of the UE and forbids the roaming, the acquiring module 401 is specifically configured to acquire the last PLMN identification added to a forbidden PLMN list.

Further, referring to FIG. 6, the apparatus further includes:
a deleting module 405, configured to, after the switching module 403 switches to the matching IMSI, delete the PLMN identification from the forbidden PLMN list.

In sum, in this embodiment of the present invention, change conditions of files such as the LAI, the RAI or the forbidden PLMN list in the SIM card are monitored, the PLMN identification of the current VPLMN is accurately acquired from a changed file, the IMSI list is searched for the matching IMSI according to the PLMN identification, and the matching IMSI is switched to. In this way, a function of automatic switching among multiple IMSIs in a single SIM card is implemented, the user does not need to choose which IMSI to be switched to manually, user experience is good, and it is ensured a proper IMSI is switched to in time after the user moves to the new PLMN, thereby providing a local charge for the user and avoiding an unnecessary roaming charge.

It should be noted that, when the apparatus for switching an IMSI provided by the foregoing embodiment switches the IMSI, only the division of the foregoing function modules is taken as an example for illustration, and in actual use, the foregoing functions may be allocated to different function modules for completing as required, that is, the internal structure of the device is divided into different function modules to complete all or part of the foregoing functions. In addition, the apparatus for switching an IMSI provided by the foregoing embodiment and the embodiments of the methods for switching an IMSI belong to the same idea, and the specific implementation process thereof may be obtained with reference to the method embodiment, and is not described herein again.

The sequence numbers of the foregoing embodiments of the present invention are merely for the convenience of description, instead of implying the preference of the embodiments.

Persons of ordinary skill in the art should understand that all or a part of the steps of the methods according to the embodiments may be implemented by a program instructing relevant hardware. The program may be stored in a computer readable storage medium. The storage medium may be, for example, a read-only memory, a magnetic disk, or an optical disk.

The foregoing descriptions are merely exemplary embodiments of the present invention, but are not intended to limit the present invention. Any modification, equivalent replacement, or improvement made without departing from the principle of the present invention should fall within the protection scope of the present invention.

## Claims

1. A method for switching an international mobile subscriber identity, IMSI, comprising:
acquiring public land mobile network, PLMN identification of a PLMN being currently visited by a user;
judging whether an IMSI matching the PLMN identification exists in an IMSI list; and
if yes, switching to the matching IMSI.

2. The method according to claim 1, wherein the acquiring the PLMN identification of the PLMN being currently visited by the user specifically comprises:
acquiring the PLMN identification from location area identification or routing area identification.

3. The method according to claim 2, wherein before the acquiring the PLMN identification from the location area identification or the routing area identification, the method further comprises:
detecting whether at least one of the location area identification and the routing area identification is updated; and
if yes, correspondingly, the acquiring the PLMN identification from the location area identification or the routing area identification comprises:
acquiring the PLMN identification from the location area identification or the routing area identification that completes the updating first.

4. The method according to claim 1, wherein the acquiring the PLMN identification of the PLMN being currently visited by the user specifically comprises:
acquiring the last PLMN identification added to a forbidden PLMN list.

5. The method according to claim 4, wherein after the switching to the matching IMSI, the method further comprises:
deleting the PLMN identification from the forbidden PLMN list.

6. An apparatus for switching an international mobile subscriber identity, IMSI, comprising:
an acquiring module, configured to acquire public land mobile network, PLMN identification of a PLMN being currently visited by a user;
a judging module, configured to judge whether an IMSI matching the PLMN identification that is acquired by the acquiring module exists in an IMSI list; and
a switching module, configured to, when the judging module judges that the IMSI matching the PLMN identification exists, switch to the matching IMSI.

7. The apparatus according to claim 6, wherein the acquiring module is specifically configured to acquire the PLMN identification from location area identification or routing area identification.

8. The apparatus according to claim 7, further comprising:
a detecting module, configured to, before the acquiring module acquires the PLMN identification from the location area identification or the routing area identification, detect whether at least one of the location area identification and the routing area identification is updated; and if yes,
correspondingly, the acquiring module is specifically configured to acquire the PLMN identification from the updated location area identification or the updated routing area identification.

9. The apparatus according to claim 6, wherein the acquiring module is specifically configured to acquire the last PLMN identification added to a forbidden PLMN list.

10. The apparatus according to claim 9, further comprising:
a deleting module, configured to, after the switching module switches to the matching IMSI, delete the PLMN identification from the forbidden PLMN list.
